(19) Europäisches Patentamt / European Patent Office / Office européen des brevets

(11) **EP 2 214 033 A2**

(12) **EUROPEAN PATENT APPLICATION**

(43) Date of publication:
**04.08.2010 Bulletin 2010/31**

(51) Int Cl.:
**G01S 19/36** *(2010.01)*

(21) Application number: **10151699.5**

(22) Date of filing: **26.01.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS** | (71) Applicant: **Samsung Electronics Co., Ltd.**<br>**Suwon-si,**<br>**Gyeonggi-do 442-742 (KR)** |
| (30) Priority: **27.01.2009 GB 0901295**<br>**18.12.2009 KR 20090127080** | (72) Inventor: **Thind, Surinder Singh**<br>**Gyeonggi-do 442-742 (KR)**<br><br>(74) Representative: **Jenkins, Richard Gavin**<br>**Harrison Goddard Foote**<br>**106 Micklegate**<br>**York YO1 6JX (GB)** |

(54) **Method and apparatus for extracting data from multi-carrier signals, method of using the data extraction method, global navigation satellite system receiver using the data extraction method, and machine-readable storage**

(57)   A method is provided for extracting data signals having different carrier frequencies. At least three data signals are received, a lowest carrier frequency being $f_L$ and a highest carrier frequency being $f_H$. A first local signal is generated having a first frequency. The at least three data signals are mixed with the first local signal to generate a first mixed signal. The first mixed signal is filtered with filtering means having a pass-band of bandwidth $BW_F$, where $BW_F < (f_H - f_L)$, to produce a first filtered signal carrying data of a first plurality of the data signals. A second local signal is generated having a second, different frequency. The at least three data signals are mixed with the second local signal to generate a second mixed signal. The second mixed signal is filtered with the filtering means to produce a second filtered signal carrying data of a second, different plurality of the data signals.

FIG.5

EP 2 214 033 A2

## Description

Field of the Invention

The present invention relates generally to the extraction of data from a plurality of data signals having different carrier frequencies, and more particularly, to the extraction of data from GLObal NAvigation Satellite System (GLONASS) navigation signals transmitted from respective satellites.

Background to the Invention

There are a number of applications that require the extraction of data from signals having a plurality of different carrier frequencies. One such application is in a GLONASS receiver, which extracts data from a plurality of navigation signals transmitted from a respective satellite or Space Vehicle (SV). Each navigation signal carries respective data and has its own respective carrier frequency.

Before extracting data, the received data signals, which occupy a received signal band, are mixed with a local oscillator signal at a predetermined frequency (or occupying a narrow frequency band, centred on that predetermined frequency). This mixing generates an Intermediate Frequency (IF) signal that carries all of the original data from the plurality of received signals but in a different frequency band, namely, the IF band. This IF band may have the same bandwidth as the received signal band, but can be arranged such that it is positioned at a lower frequency, compared with the initial Radio Frequency (RF) band. Frequency mixing produces a plurality of frequency components that are related to the input radio frequencies and the local oscillator frequency. Commonly the IF band used for extracting data is a band of the mixer output that corresponds to the "different" frequencies. Specifically, a particular RF component $RF_1$ in the received data band will have a corresponding IF component $IF_1$ in the IF band, where $IF_1 = RF_1 - LO_1$, and $LO_1$ is the frequency of the local oscillator signal.

There are different techniques that may be employed to extract data from the IF signals that occupy the IF band in the mixer output.

One technique that may be employed passes the mixer output through a broad-band filter having a pass-band that is broad enough such that the filtered signal carries all of the data contained in the originally received RF signals. This broad-band filtered signal can then be sampled at a sufficiently high rate to extract all of the data it contains. This technique is advantageous in that only a single local oscillator frequency needs to be generated. However, the technique is disadvantageous in that a high sampling rate is needed. In general, the sampling needs to take place at a rate at least twice the bandwidth of the broad-band filtered signal so as to be able to extract all of the data from the broad-band filtered signal. This may be difficult or even impossible to achieve in certain applications. For example, if this technique is used to extract data from GLONASS navigation signals, then a sampling rate of 13 MHz may be required.

An alternative technique for extracting data involves the switching of the local oscillator frequency between a plurality of values, one for each of the carrier frequencies in the received data signals. A relatively narrow-band filter is then used to filter the mixer output so that the filtered signal carries the data of just one of the received signals at any one time. Specifically, the local oscillator output frequency is set to a first value so that the narrow band filter output carries the data of just the data signal at the first carrier frequency. The local oscillator signal is then switched to a second frequency such that the narrow-band filter output carries just the data of the received signal having the second carrier frequency. For each narrow-band filtered signal, the respective data can then be extracted by sampling at a relatively lower rate. This lower rate may be twice the bandwidth of the narrow-band filter, rather than twice the bandwidth of the broad-band filter as in the previously described technique. This alternative technique is advantageous in that reduced sampling rates may be used. However, this alternative technique is disadvantageous in is that the local oscillator output frequency has to be switched through a plurality of different values. Each time a switch is made, it can take some time for the output frequency to settle, thus slowing the overall data extraction process. In GLONASS receiver applications, this will cause a location determination to take a longer amount of time.

Summary of the Invention

The present invention has been made to address at least the above problems and/or disadvantages and to provide at least the advantages described below. Accordingly, an aspect of the present invention provides methods for extracting data from a plurality of data signals having different carrier frequencies.

According to one aspect of the present invention a method is provided for extracting data from a plurality of data signals having different carrier frequencies. At least three data signals are received. Each data signal includes a respective carrier wave having a respective carrier frequency and modulated so as to carry respective data. A lowest carrier frequency is $f_L$ and a highest carrier frequency is $f_H$. A first local signal having a first frequency $LO_1$ is generated. The at least three data signals are mixed with the first local signal to generate a first mixed signal carrying data of each of the at least three data signals. The first mixed signal is filtered with filtering means having a pass-band of bandwidth $BW_F$, where $BW_F < (f_H - f_L)$, to produce a first filtered signal carrying data of a first plurality of the at least three data signals. The first filtered signal is processed to extract the data of the first plurality of data signals. A second local signal having a second frequency $LO_2$ is generated. $LO_2$ is dif-

ferent from $LO_1$. The at least three data signals are mixed with the second local signal to generate a second mixed signal carrying the data of each of the at least three data signals. The second mixed signal is filtered with the filtering means to produce a second filtered signal carrying data of a second plurality of the at least three data signals. The second plurality is different from the first plurality. The second filtered signal is processed to extract the data of the second plurality of data signals.

According to another aspect of the present invention a method is provided for extracting data from a plurality of data signals having different carrier frequencies. At least three data signals are received. Each data signal includes a respective carrier wave having a respective carrier frequency and modulated so as to carry respective data. A lowest carrier frequency is $f_L$ and a highest carrier frequency is $f_H$. A first local signal having a first frequency $LO_1$ is generated. The at least three data signals are mixed with the first local signal to generate a first mixed signal carrying data of each of the at least three data signals. The first mixed signal is filtered with filtering means having a first pass-band of first bandwidth $BW_{F1}$ centered on a first center frequency $CF_1$, where $BW_{F1} < (f_H - f_L)$, to produce a first filtered signal carrying data of a selected first plurality of the at least three data signals. The first filtered signal is processed to extract the data of the first plurality of data signals. The first mixed signal is filtered with filtering means having a second pass-band of second bandwidth $BW_{F2}$ centered on a second center frequency $CF_2$, where $BW_{F2} < (f_H - f_L)$, to produce a second filtered signal carrying data of a selected second plurality of the at least three data signals. $CF_2$ is different from $CF_1$, and the second plurality is different from the first plurality. The second filtered signal is processed to extract the data of the second plurality of data signals.

According to a further aspect of the present invention, an apparatus is provided. The apparatus includes a receiving antenna for receiving at least three data signals, each data signal comprising a respective carrier wave having a respective carrier frequency and modulated so as to carry respective data, a lowest carrier frequency being $f_L$ and a highest carrier frequency being $f_H$. The apparatus also includes a frequency synthesizer for generating a first local signal having a first frequency $LO_1$ and for generating a second local signal having a second frequency $LO_2$, wherein $LO_2$ is different from $LO_1$. The apparatus additionally includes a mixer arranged to mix the at least three received data signals with the first local signal to generate a first mixed signal carrying data of each of the at least three data signals, and to mix the at least three data signals with the second local signal to generate a second mixed signal carrying the data of each of the at least three data signals. The apparatus further includes filtering means arranged to filter the first mixed signal with filtering means having a pass-band of bandwidth $BW_F$, where $BW_F < (f_H - f_L)$, to produce a first filtered signal carrying data of a first plurality of the at least three data signals, and to filter the second mixed signal with the filtering means to produce a second filtered signal carrying data of a second plurality of the at least three data signals, wherein the second plurality is different from the first plurality. The apparatus also includes an analog-to-digital converter arranged to process the first filtered signal to extract the data of the first plurality of data signals, and to process the second filtered signal to extract the data of the second plurality of data signals.

According to an additional aspect of the present invention, an article of manufacture is provided for extracting data from a plurality of data signals having different carrier frequencies, comprising a machine-readable medium containing one or more programs which when executed implement the steps of: (i) receiving at least three data signals, each data signal comprising a respective carrier wave having a respective carrier frequency and modulated so as to carry respective data, a lowest carrier frequency being $f_L$ and a highest carrier frequency being $f_H$; (ii) generating a first local signal having a first frequency $LO_1$; (iii) mixing the at least three data signals with the first local signal to generate a first mixed signal carrying data of each of the at least three data signals; (iv) filtering the first mixed signal with filtering means having a pass-band of bandwidth $BW_F$, where $BW_F < (f_H - f_L)$, to produce a first filtered signal carrying data of a first plurality of the at least three data signals; (v) processing the first filtered signal to extract the data of the first plurality of data signals; (vi) generating a second local signal having a second frequency $LO_2$, wherein $LO_2$ is different from $LO_1$; (vii) mixing the at least three data signals with the second local signal to generate a second mixed signal carrying the data of each of the at least three data signals; (viii) filtering the second mixed signal with the filtering means to produce a second filtered signal carrying data of a second plurality of the at least three data signals, wherein the second plurality is different from the first plurality; and (ix) processing the second filtered signal to extract the data of the second plurality of data signals.

Brief Description of the Drawings

The above and other aspects, features and advantages of the present invention will be more apparent from the following detailed description when taken in conjunction with the accompanying drawings, in which:

   FIG. 1 is a diagram illustrating the frequency spectrum of signals in the GLONASS system;
   FIG. 2 is a diagram illustrating a GLONASS receiver;
   FIG. 3 is a diagram illustrating an apparatus for extracting data;
   FIG. 4 is a diagram illustrating an apparatus for extracting data;
   FIG. 5 is a diagram illustrating an apparatus for extracting data, according to an embodiment of the present invention;

FIGs. 6A and 6B are diagrams illustrating received signal bandwidths and intermediate frequency bandwidths in a data extraction technique, according to an embodiment of the present invention;

FIGs. 7A and 7B are diagrams illustrating received data and intermediate frequency bands in relation to a filter pass-band, according to an embodiment of the present invention;

FIGs. 8A, 8B and 8C are diagrams illustrating a received signal band, a filter pass-band, and positions of the intermediate frequency bands, according to an embodiment of the present invention;

FIG. 9 is a diagram illustrating the pass-band of filter means and the relative position of an intermediate frequency band, according to an embodiment of the present invention;

FIGs. 10A, 10B and 10C are diagrams illustrating a received signal band, a corresponding intermediate frequency band, and two different pass-bands, according to an embodiment of the present invention;

FIG. 11 is a diagram illustrating an apparatus, according to an embodiment of the present invention; and

FIG. 12 is a diagram illustrating an alternative apparatus, according to an embodiment of the present invention.

Description of Embodiments of the Invention

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

Certain embodiments of the present invention aim to reduce an IF bandwidth to be processed, so that the IF data sampling rate can be lowered.

Embodiments of the present invention apply to broadband receivers in general, and particular embodiments of the present invention apply to GLONASS receivers.

In current GLONASS receivers, an IF bandwidth of about 8 MHz carries the data of all of the received satellite signals. Sampling of this bandwidth to extract all of the data requires a sampling rate that is greater than 16 MHz according to the Nyquist sampling theorem. Such a high sampling rate may be beyond the capability of some commercially available base bands (i.e., base band processors), especially those for mobile applications (for example, portable communication devices such as mobile phones, cell phones, and personal digital assistants, and in portable Global Navigation Satellite System (GNSS) receivers/handsets).

Certain embodiments of the present invention are advantageous in that they are able to reduce the sampling rate required to sample the IF output. Specifically, these embodiments require a lower sampling rate from the base band.

The GLONASS system represents just one application to which embodiments of the present invention may be applied. Embodiments of the invention may also be applied to data extraction from a wide variety of multicarrier systems.

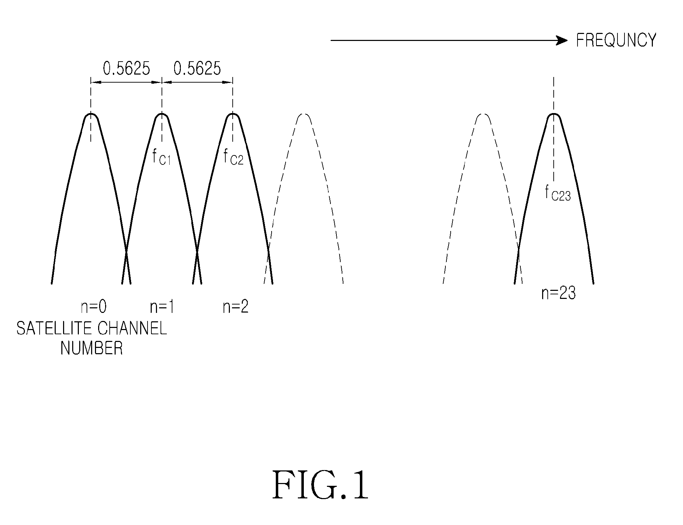

Referring now to the GLONASS system, unlike the GPS spectrum consisting of a single spread carrier with bandwidth of 2MHz, the GLONASS spectrum consists of multiple carriers, and each satellite is assigned a respective carrier for identification. The spectrum is arranged as shown in FIG. 1.

Thus, the navigation signal transmitted from each satellite, or SV, is a data signal comprising a respective carrier wave having a respective carrier frequency and modulated so as to carry respective data. Referring to FIG. 1, the first channel uses a carrier frequency $f_{c1}$, the second channel uses a carrier frequency $f_{c2}$, etc. The carrier frequency $f_{cn}$ of each channel is thus given by:

$$f_{cn} = 1602 + n \cdot (0.5625) \text{ MHz}$$

(where the integer n ranges from -7 to +6 for commercial use).

This could also be represented by $f_{cn}$ = 1597.5000 + n· (0.5625) MHz where the integer n ranges from 1 to 14.

Thus, the first carrier frequency is 1598.0625MHz and last carrier frequency is 1605.375MHz. With an antipodal configuration (in which diametrically opposite satellites can share same frequency channel), twenty-four satellites will be allocated frequency channels. Hence a spectrum of 7.3125MHz will cover the constellation of twenty-four satellites. For a receiver to look at data from any satellite from the constellation, the receiver front end has to "tune" into the satellite carrier identified by the equation above.

With this type of signal spectrum, the receiver design can become complicated. Due to the processing power required, it is very difficult for base band to monitor all channels (i.e. all satellites) simultaneously. It is much easier if channels are monitored in a predetermined sequence.

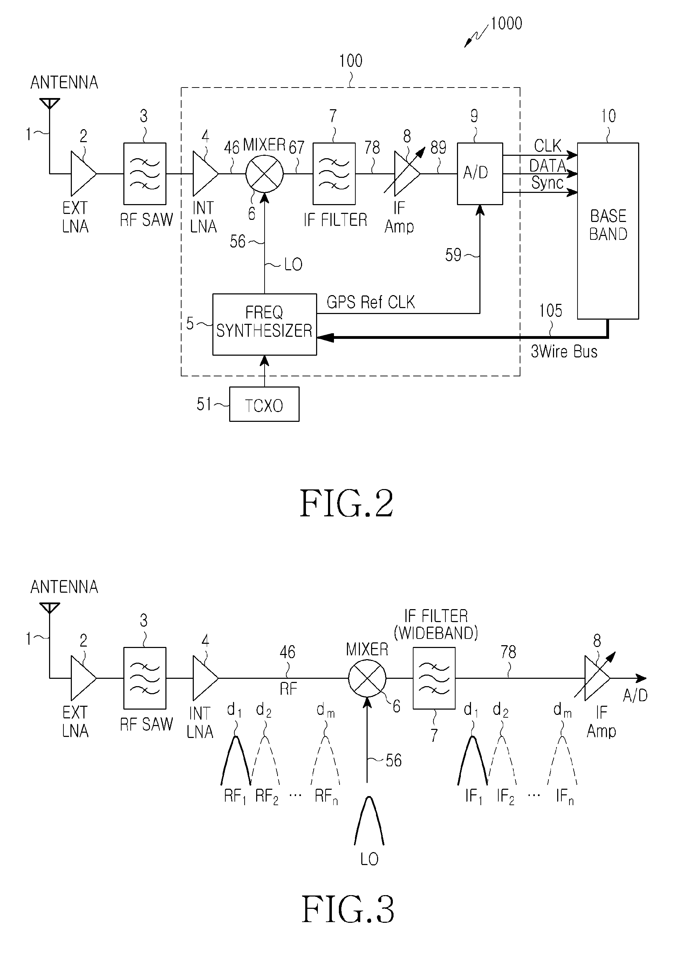

A typical GLONASS receiver is described with reference to FIG. 2.

A typical RF receiver front end has an antenna, a Low Noise Amplifier (LNA), a filter(s), a mixer(s) and an IF stage. For cost reasons it is best to use a direct conversion (Zero IF) type of receiver or a low IF receiver requiring only a single mixing stage, reducing the number of IF filters required. FIG. 2 shows a typical receiver 1000 for GLONASS.

The sections of the receiver 1000 within broken line 100 are normally available as a single integrated device, thereby leaving an external antenna, an LNA, an RF Surface Acoustic Wave (SAW) and a reference Temperature-Compensated Crystal Oscillator (TCXO) to be added to complete receiver front end.

The typical GLONASS receiver 1000 (which may also be referred to as a typical receiver configuration) comprises an antenna 1 for receiving a plurality of data signals from the SVs. An external LNA 2 is arranged to amplify the received signals, and a front end or external filter 3 (such as an RF SAW filter) is used to filter the amplified received signals. The filtered, amplified signals are then passed to an internal LNA 4, which further amplifies the received signals and provides them to a mixer 6 (which may also be described as a frequency mixer). A frequency synthesizer 5 is arranged to generate a local oscillator signal LO 56 and to provide this signal as an additional input to the mixer 6. The local oscillator signal LO 56 may include just a single frequency, or may have a very narrow bandwidth centred on a particular local oscillator frequency. The mixer 6 thus mixes the local oscillator signal LO 56 with received (and amplified and filtered) data signals 46 to produce a mixer output signal 67, which may also be referred to as an intermediate frequency signal. This signal carries all of the data from the originally received data signals, but in an intermediate frequency band rather than the received signal band. In effect, the mixer 6 has shifted the frequency of the band carrying the received data. The mixer output signal 67 is then passed through a filter 7 (which may also be described as an IF filter). This filter 7 has a pass-band arranged to filter out frequencies not carrying received data. A filtered signal 78 is then amplified by an IF amplifier 8, and an amplified signal 89 is provided to sampling means 9 in the form of an A/D converter. This A/D converter 9 receives a reference clock signal 59 from the frequency synthesizer 5. The A/D converter 9 samples the amplified signal 89 at an appropriate rate and extracts data from it. The A/D converter 9 provides that data to a base band processor 10, which may also be described as a control means (or a controller). The A/D converter 9 also provides a clock signal and a synchronization signal to the processor 10. The processor 10 provides a control signal to the frequency synthesiser 5 by means of a 3 wire bus 105. A crystal oscillator 51 provides a stable reference frequency to the frequency synthesizer 5, from which the frequency synthesizer 5 may generate the local oscillator signal 56 at a frequency determined by the control signal from the processor 10 via connection 105.

Although FIG. 2 represents a typical GLONASS receiver architecture, the apparatus may be adapted, for example by suitable programming of the processor 10, to embody the present invention and to implement data extraction methods embodying the present invention.

The GLONASS system is a Frequency Division Multiple Access (FDMA) setup, and each satellite is assigned a frequency channel for identification. In contrast, a GPS system is a Code Division Multiple Access (CDMA) system and all satellites transmit on the same frequency ($L_1$, 1575.42MHz), with each satellite assigned a code for identification. For GPS, the local oscillator is at a fixed frequency, and the local oscillator frequency depends on the intermediate frequency required, i.e., fixed LO and fixed IF.

For GLONASS, in order to receive data from a satellite, the receiver must tune in to that satellite. As each satellite has a different assigned frequency, the receiver is required to extract data from signals having a wide range of carrier frequencies. Tuning into satellites can be done in two ways:

a) Fixed LO frequency requiring wideband IF frequency; and
b) Variable LO frequency requiring narrow band IF (sampling channel by channel)

FIG. 3 is a diagram illustrating the concept of fixed LO/wideband IF.

The plurality of data signals 46 provided to the mixer 6 in FIG. 3 include a first data signal carrying data $d_1$ in an RF band $RF_1$, a second signal carrying data $d_2$ in a second RF band $RF_2$, etc. The filter 7 is arranged so that it has a sufficiently large bandwidth to let through all of the intermediate frequency signals corresponding to the incoming RF signals $RF_1$, $RF_2$. For example, intermediate frequency signal $IF_1$ corresponds to received signal $RF_1$ etc. Thus, the filtered signal 78 from the filter 7 still carries the data of all of the received signals (i.e., it carries $d_1$, $d_2$..., $d_m$), and this data in the filtered signal 78 is carried in an IF band having substantially the same width as the overall bandwidth of the received signals. The A/D converter 9 needed to extract the data $d_1$, $d_2$, etc., from the filtered signal 78 needs to sample at a rate at least twice the IF bandwidth.

This first "wideband" approach is advantageous in that the local oscillator is not required to frequency hop. Thus, there will be no delay in settling time of the local oscillator/Phase Locked Loop (PLL). This approach is also advantageous in that signals from all visible satellites are available simultaneously. However, this approach is disadvantageous because a high sampling rate is required to cover all visible satellites.

The IF filter BW must be greater then 6.1875MHz to accommodate this first approach. The sampling rate required from the base band according to Nyquist will be at least twice the IF bandwidth (typical 13MHz), which could be at or near the limit of some base bands.

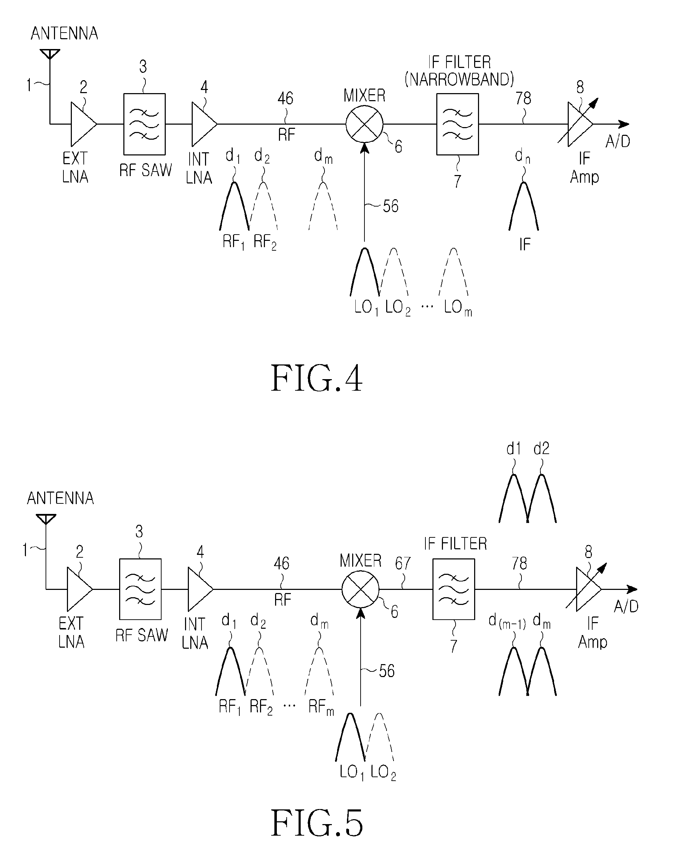

FIG. 4 is a diagram illustrating an alternative approach for extracting data. The LO does a frequency hop to match the satellite frequency channel being processed at a particular time. In this method a fixed narrowband IF of 1.1MHz is used, requiring a sampling rate of greater then 2.2MHz (typically 2.5MHz)

In order to extract data $d_1$ from the first data signal that occupies band $RF_1$, the frequency synthesiser

or local oscillator is arranged to generate a first local oscillator signal $LO_1$. $LO_1$ is mixed with the data signals, such that the narrow band filter 7 passes just that part of the intermediate frequency spectrum containing the data $d_1$. To extract data $d_2$, the local oscillator output is switched to provide signal $LO_2$, and so on. In general, the portion of the intermediate frequency spectrum being passed by the narrow band filter 7 at any one time comprises data $d_n$ corresponding to an $n^{th}$ one of the input signals, as determined by generating a local oscillator signal of frequency $LO_n$.

This method is disadvantageous in that LO is required to continually change frequency to match with the frequency of the monitored satellite. This introduces a delay each time the LO frequency is changed. There will also be a delay in the PLL lock time and the settling time during which LO frequency is not very accurate. The expected LO frequency range is 6.1875MHz

This method will put less of a burden on base band processor because the IF frequency is narrow, requiring a lower sampling rate (typically 2.5MHz). Only one satellite channel will be sampled at a time using this technique.

In accordance with embodiments of the present invention, because a sampling rate has to be greater then twice the IF BW, it is useful to reduce IF BW required for reducing sampling rate. The IF BW requirement can be reduced in certain embodiments of the present invention. Thus reduction is done by reducing the IF filter bandwidth $BW_F$ (say by half) and then performing two scans of a carrier by changing the LO frequency.

Referring now to FIG. 5, a diagram illustrates a receiver apparatus adapted to perform a data extraction method, according to an embodiment of the present invention. In this arrangement the frequency synthesizer or local oscillator is arranged to switch a local oscillator signal frequency between two values, $LO_1$ and $LO_2$. The mixer 6 receives a plurality of data signals having respective RF bands, $RF_1$, $RF_2$, etc., and each carrying a respective quantity of data, $d_1$, $d_2$, etc. The first local oscillator frequency $LO_1$ is arranged such that the portions of the intermediate frequency band in signal 67 that carry data $d_1$ and $d_2$ are passed through the pass-band of IF filter 7. However, the pass-band of the filter 7 is sufficiently narrow that IF components carrying waves of the received signals are not passed through. Thus, when the local oscillator frequency is $LO_1$ the filtered signal 78 from the filter 7 comprises data $d_1$ and $d_2$ only. The filtered signal 78 is amplified by the amplifier 8 before being passed to suitable sampling means (for example, an A/D converter). An appropriate sampling rate may then be chosen to extract data $d_1$ and $d_2$. The local oscillator frequency is then switched to $LO_2$, which is arranged to place the intermediate frequency components carrying data $d_m$ and $d_{(m-1)}$ through the pass-band of the filter 7. The filter output 78 is then sampled to extract this data from the different plurality of received signals. In this embodiment of the present invention, m may be 4, such that by switching between the two local oscillator frequencies all of the data in the received signals can be extracted. In alternative embodiments of the present invention, if m is greater than 4, a larger number of local oscillator frequencies may be used, for example, to extract all of the data by sampling the data of just two received signals at a time. Alternatively, or additionally, a wider pass-band filter 7 may be used such that its output 78 carries the data of more than two received signals or channels at a time.

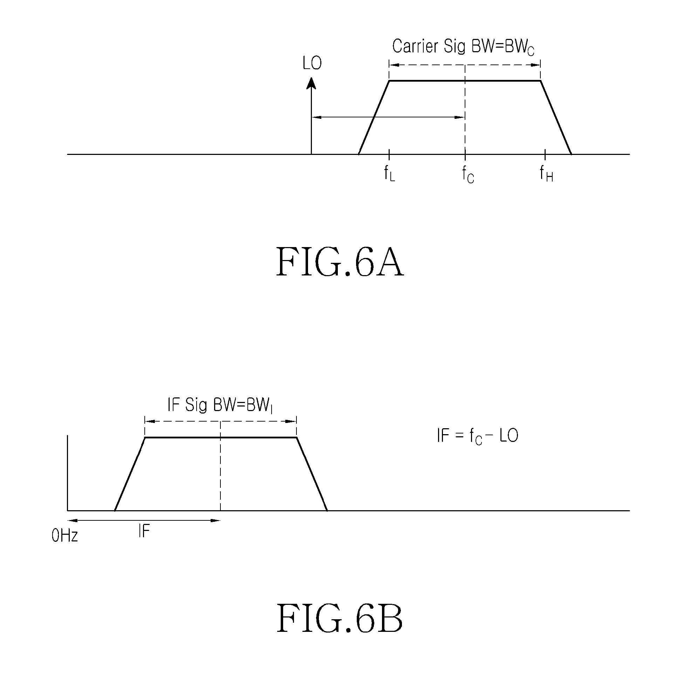

FIGs. 6A, 6B, 7A, 7B, 8A, 8B, 8C and 9 illustrate the relationship between the received radio frequency band, the intermediate frequency band, and intermediate frequency filter bands in more detail.

FIG. 6A is a diagram illustrating the frequency spectrum of the received signals and the local oscillator signal, and FIG. 6B is a diagram illustrating the frequency spectrum of the intermediate frequency signals.

FIG. 6A illustrates the received signal band in certain embodiments of the present invention. The signal band has a carrier or received signal bandwidth equal to $BW_C$, and centred on a center carrier frequency $f_C$. Generally, the lower end of the received signal band corresponds to frequency $f_L$, the lowest carrier frequency employed by the data signals, and the upper end of the band generally corresponds to $f_H$, the highest carrier frequency employed by the received data signals. Referring to FIG. 6B, a local oscillator signal or frequency LO is generated, generating (via frequency mixing) an intermediate frequency band carrying all of the received data signals having a bandwidth $BW_I$ (equal to $BW_C$) and centred on an intermediate frequency IF, where IF = $f_C$ - LO.

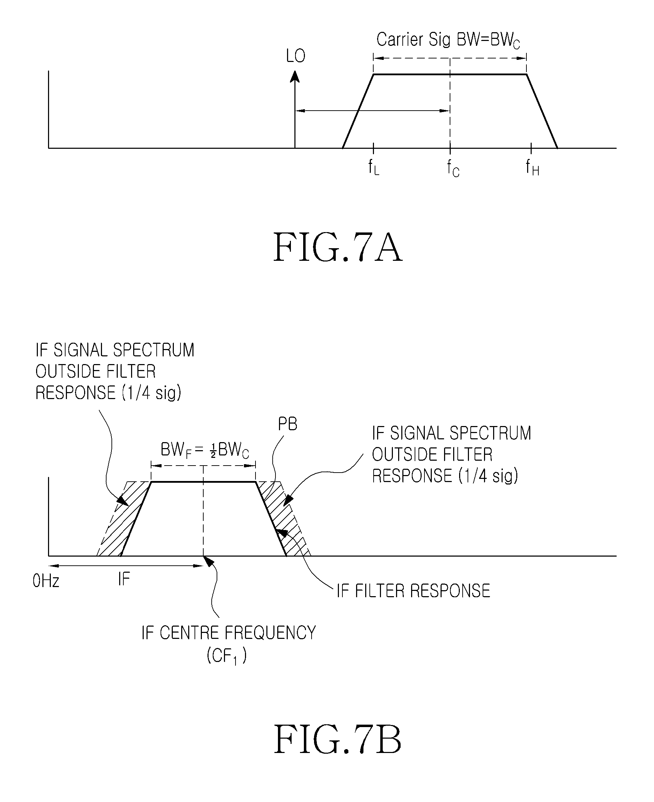

Thus, FIGs. 6A and 6B illustrate a normal wideband IF case. FIGs. 7A and 7B shows a reduced IF case (half IF BW). For the reduced IF case, the IF bandwidth will be 3.09375MHz with corresponding sampling of greater then 6.1875MHz (typically 7MHz). The IF sampling scans can be done in two ways: by changing the frequency of the LO such that a desired portion of the GLONASS spectrum lies at a center of the IF filter response, or by changing the center frequency of the IF filter such that its center lies at the center of the desired GLONASS signal spectrum. The signal spectrum in this case is in the IF domain.

FIG. 7A is a diagram illustrating the frequency spectrum of the received signals and the local oscillator signal. FIG. 7B is a diagram illustrating the frequency spectrum of the intermediate frequency signals.

From FIGs. 7A and 7B it can be seen that, for an IF filter of bandwidth $BW_F$, equal to half the bandwidth of the IF signal, by selecting LO such that the IF signal spectrum is centered at the center frequency $CF_1$ of the IF filter, part of the IF signal spectrum will be lost. A quarter of IF signal spectrum will be lost on either side of the filter response. Referring to FIG. 7B, each portion corresponding to a quarter of the IF signal spectrum is disposed outside of the IF filter response and represented as a hatched region. This can be resolved by changing the LO frequency such that in a first scan the lower half of the IF signal spectrum falls inside the IF filter response, then changing the LO so that the upper half of the IF spectrum falls inside the IF filter response.

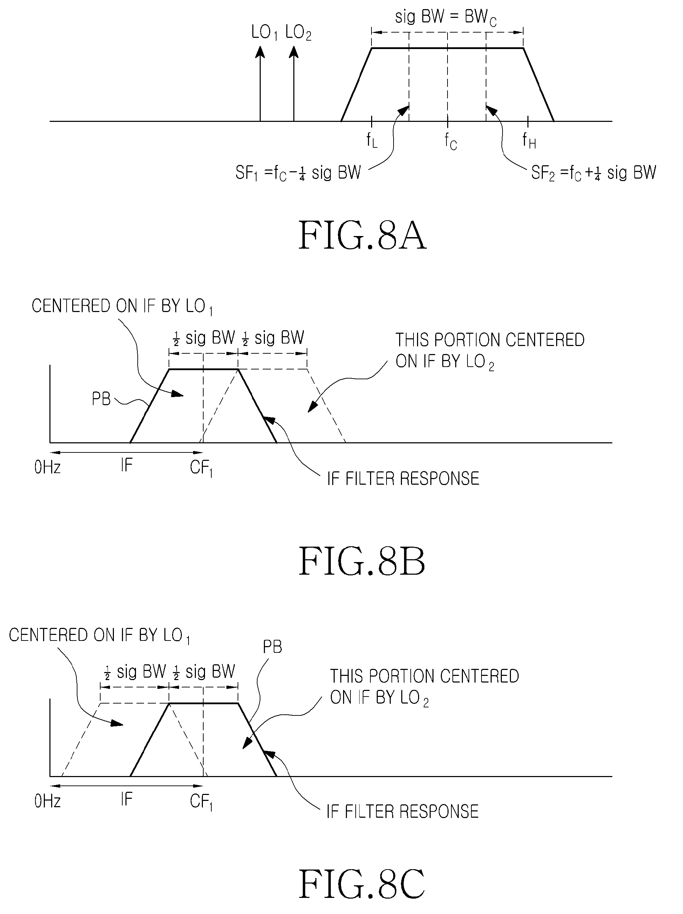

FIGs. 8A, 8B and 8C are diagrams illustrating how this adjustment can be performed, according to an embodiment of the present invention. PB denotes the pass-band (or response characteristic) of the filter 7, centred on frequency $CF_1$. FIG. 8A shows the frequency spectrum of the received signals and the local oscillator signal. FIGs. 8B and 8C show the frequency spectrum of the intermediate frequency signals and the filter response.

As shown in FIG. 8B, this adjustment is only possible if the LO frequency is calculated such that the center frequency $SF_1$ of the lower half of the signal spectrum appears at the center frequency $CF_1$ of IF filter when down converted. Referring to FIG. 8B, the lower half of the signal spectrum is superposed with the IF filter response, and the upper half of the signal spectrum is represented as a dashed line. As shown in FIG. 8C, the LO is also calculated so that center frequency SF2 of the upper half of the spectrum appears at the center frequency $CF_1$ of IF filter. The two center frequencies of interest are labelled as $SF_1$ and $SF_2$, as shown in FIGs. 8A, 8B and 8C.

For a low sided LO injection mixer, the IF can be calculated as shown below:

$$CF_1 = IF = RF - LO$$

$$CF_1 = IF = SF_1 - LO_1$$

and

$$CF_1 = IF = SF_2 - LO_2$$

$$SF_1 = f_c - \tfrac{1}{4}\, sig\ BW$$

(lower half)

$$SF_2 = f_c + \tfrac{1}{4}\, sig\ BW$$

(upper half)

$$CF_1 = IF = (f_c - \tfrac{1}{4}\, sig\ BW) - LO_1$$

for lower half of spectrum

$$CF_1 = IF = (f_c + \tfrac{1}{4}\, sig\ BW) - LO_2$$

for upper half of spectrum

The corresponding LO frequency can be obtained from:

$$LO_1 = (f_c - \tfrac{1}{4}\, sig\ BW) - IF$$

$$LO_2 = (f_c + \tfrac{1}{4}\, sig\ BW) - IF$$

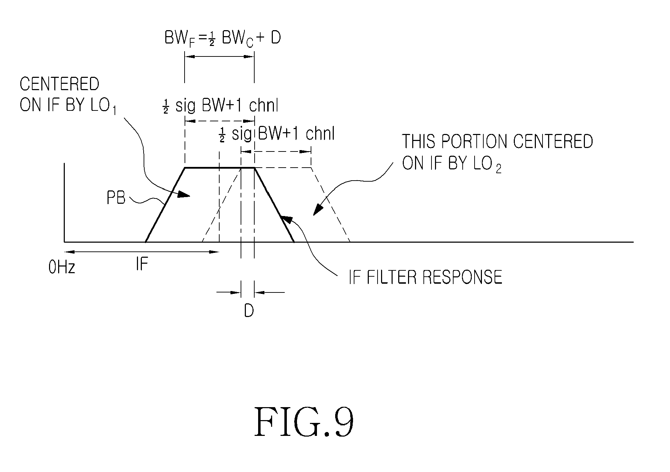

By careful positioning of the LO, the complete signal spectrum can be covered by alternating LO between $LO_1$ and $LO_2$. There is a risk of a channel located at a center of the GLONASS spectrum being corrupted by edge effects of IF filter. This can be resolved by extending the IF filter by one channel so that the filter response goes just beyond the first and last channel. This will result in the middle channel being scanned by both scans, as shown in FIG. 9, where D denotes the frequency difference between adjacent channels, i.e., between adjacent carrier frequencies of the received data signals. FIG. 9 is a diagram illustrating the frequency spectrum of the intermediate frequency signals and the filter response, according to an embodiment of the present invention. In FIG. 9, a portion corresponding to the lower half of the signal spectrum and one additional channel is superposed with the IF filter response, and the other portion corresponding to the upper half of the signal spectrum and one additional channel is represented as a dashed line.

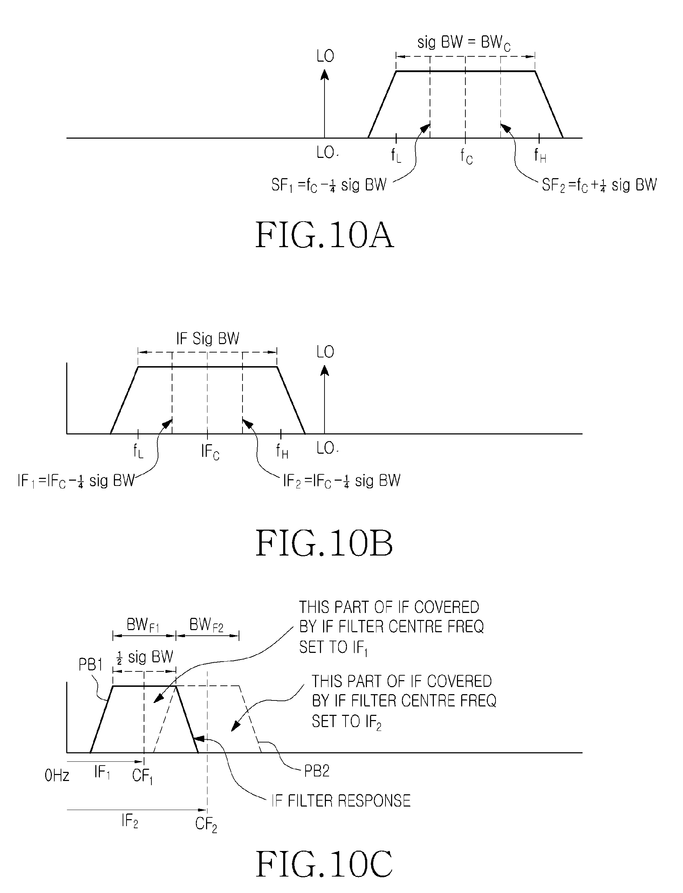

As an alternative to using a fixed IF filter arrangement and switching a local oscillator frequency, certain embodiments of the present invention employ a technique in which the local oscillator frequency is held constant, and the filtering of the mixer output is varied so as to selectively process and extract data from different portions of the IF frequency band. Each portion includes the data of at least two of the received data signals. In one such embodiment of the present invention, a half IF BW filter is used, the LO frequency is kept fixed, and the center frequency of the IF filter is switched to cover the GLONASS IF spectrum. FIG. 10A is a diagram illustrating the frequency spectrum of the received signals and the local oscillator signal. FIG. 10B is a diagram illustrating the frequency spectrum of the intermediate frequency signals. FIG. 10C is a diagram illustrating the frequency spectrum of the intermediate frequency signals and the filter response. FIGs. 10A, 10B and 10C show that to cover the entire signal BW, the IF spectrum has to be first positioned such that $SF_1$ falls at the center $CF_1$ of the IF filter in one scan, and $SF_2$ falls at the center $CF_2$ of the IF filter in a second scan. Rather then shifting the center of the IF frequency spectrum, the center frequency of the IF filtering means is switched to meet the criterion for covering the entire GLONASS spectrum. In FIGs. 10A, 10B and 10C, $PB_1$ represents a pass-band (or a first filter response) of the IF filter centered on the center frequency $CF_1$, $PB_2$ represents a pass-band (or a second filter response) of the IF filter centered on the center frequency $CF_2$. $PB_1$ is represented as a solid line, $PB_2$ is represented as a dashed line, and the frequency spectrum of the intermediate frequency signals is superposed with a combination of the first and second filter responses.

The two IF center frequencies required for the IF filter means in this example can be evaluated from the following:

$$CF_1 = IF_1 = IF_c - \tfrac{1}{4}\,\text{sig BW}$$

(lower half of IF spectrum)

$$CF_2 = IF_2 = IF_c + \tfrac{1}{4}\,\text{sig BW}$$

(upper half of IF spectrum)

$$IF_c = f_c - LO$$

$$CF_1 = IF_1 = (f_c - LO) - \tfrac{1}{4}\,\text{sig BW}$$

$$CF_2 = IF_2 = (f_c - LO) + \tfrac{1}{4}\,\text{sig BW}$$

In embodiments of the present invention using the switched LO, the IF BW ($BW_F$) can be extended by one channel to avoid edge effects of the IF filter, leading to a middle channel being scanned twice. For an IF signal divided by n times, then n scans of the IF spectrum will be required to cover the IF spectrum. The popular IF filter bandwidths could be 1, 2, 3 or 4 MHz.

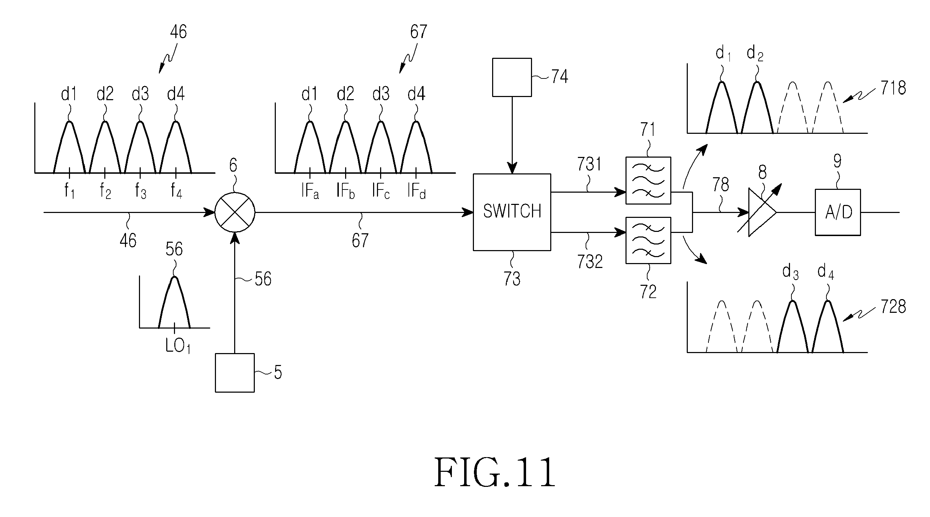

Referring now to FIG. 11, a diagram illustrates an apparatus, according to another embodiment of the present invention. The mixer 6 is arranged to receive the signal 46 having a plurality of received data signals. Each data signal carries a respective quantity of data $d_1$, $d_2$, $d_3$, $d_4$ in a respective RF band centered on a respective carrier frequency $f_1 \sim f_4$. The local oscillator 5 is arranged to generate a local oscillator signal 56 having a narrow frequency band centred on a frequency $LO_1$. The mixer 6 mixes the received data signals 46 and the local oscillator signal 56 and generates the output signal 67 that includes intermediate frequency signals carrying the respective quantities of data and each centred on a respective intermediate frequency center frequency $IF_a$, $IF_b$, etc. The mixer output signal 67 carrying all of the data in the intermediate frequency range is supplied to a controllable switch (or a routing switch) 73. The switch 73 is controlled with a signal from control means 74 to direct (or switch) the intermediate frequency signals either to a first filter 71 or a second filter 72. In this embodiment of the present invention, these filters have the same bandwidth, but their pass-bands are situated in different portions of the frequency spectrum. Thus, when the switch 73 directs intermediate frequency signals 731 to the filter 71, the filter 71 passes just the intermediate frequency signals carrying data $d_1$ and $d_2$ from the first two of the received data signals (i.e., it blocks the other two intermediate frequency signals). This filter signal 78 is then amplified by the amplifier 8 and then sampled by the A/D converter 9 to extract data $d_1$ and $d_2$. In certain embodiments of the present invention, this data is then provided to a processor arranged to calculate a location or position of the receiving apparatus from the extracted data. In a second mode, the controller 74 controls the switch 73 to divert intermediate frequency signals 732 to the second filter 72 having its pass-band arranged so as to pass just those intermediate frequency components carrying data $d_3$ and $d_4$. The output from the second filter 72 is amplified and provided to the A/D converter 9 that is able to extract data $d_3$ and $d_4$ when the mixer output is routed through filter 72.

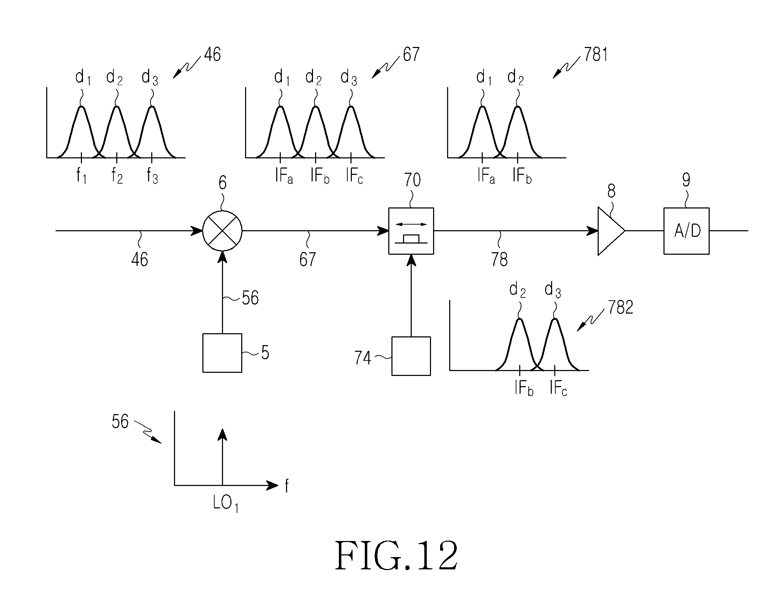

Referring now to FIG. 12, a diagram illustrates an apparatus that employs a controllable filter 70 controlled by control means 74. The controllable filter 70 is controllable in that its filtering characteristics can be altered by the control means 74. In this embodiment of the present invention, this adjustment takes the form of being able to shift the position of the pass-band in frequency space. In alternative embodiments of the present invention, the width of the pass-band may be controllable as well. The mixer 6 is again provided with the input signal 46 comprising a plurality of received signals. Each signal carries respective data $d_1$, $d_2$ and $d_3$ and each is centred on a respective carrier frequency $f_1$, $f_2$, $f_3$. The frequency synthesizer 5 is arranged to generate a single local oscillator frequency $LO_1$ and provide $LO_1$ to the mixer 6. The mixer output 67 is an intermediate frequency signal carrying all of the data $d_1$, $d_2$, and $d_3$ in an intermediate frequency band. The control means 74 is adapted to place the filter 70 in a first mode or state in which it passes only a portion of the intermediate frequency band carrying data $d_1$ and $d_2$. Data $d_1$ and $d_2$ are then extracted by means of the amplifier 8 and the sampler 9. The controller 74 then switches the controllable filter 70 to operate in a second mode or state in which it passes only those intermediate frequency components carrying data $d_2$ and $d_3$. That data is then extracted using a suitable processing means.

In an embodiment of the present invention shown in FIG. 11, all of the received data was extracted by a technique involving just a single switch in filtering characteristics. Each filter was able to pass half of the received data, and only a single local oscillator frequency needed to be generated. Similarly, in FIG. 12, all of the data was extracted by making just one change in the controllable filter characteristics. The characteristics in the first and second modes were arranged such that their pass-bands overlapped, with the data d2 being extractable in each of the two modes.

Thus, in methods embodying the present invention the bandwidth of the filtering means is arranged such that it is smaller than the total received signal bandwidth (so that processing to extract data is facilitated; for example a lower sampling rate can be used as compared with the prior art), but the filter bandwidth is made large enough so that the output of the filtering means carries the data of at least two of the received data signals, thereby reducing the number of times in which the local signal frequency needs to be switched in order to extract data from all of the received data signals.

Although the method in accordance with the first aspect of the present invention refers to generating first and second local signals, this does not preclude the possibility that further local signals of different frequencies may be generated in certain embodiments of the invention. For example, in certain embodiments, three different local signal frequencies may be used to cover the entire received signal bandwidth, the use of each local signal frequency resulting in data extraction from a respective plurality of the received data signals. Further embodiments may use a larger number of different local signal frequencies. However, in certain embodiments just two local signal frequencies may be employed, with the filtering means bandwidth being large enough to encompass at least half the received signal bandwidth such that in substantially two data extraction steps the data from all of the received signals may be obtained.

The above embodiments of the present invention are somewhat simplified, especially in terms of the number of carrier frequencies being used. In practice the number of carrier frequencies may be substantially greater, and the bandwidth of the filters may also be greater.

Embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. The storage devices and storage media are embodiments of machine-readable storage that are suitable for storing a program or programs comprising instructions that, when executed, implement embodiments of the present invention. Accordingly, embodiments of the present invention provide a program comprising code for implementing a system or method as described in this specification and a machine-readable storage storing such a program. Still further, such programs may be conveyed electronically via any medium such as a communication signal carried over a wired or wireless connection and embodiments of the present invention suitably encompass the same.

Throughout the specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the present invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for extracting data from a plurality of data signals having different carrier frequencies, the method comprising the steps of:

   receiving at least three data signals, each data signal comprising a respective carrier wave having a respective carrier frequency and modulated so as to carry respective data, a lowest carrier frequency being $f_L$ and a highest carrier frequency being $f_H$;
   mixing the at least three data signals with a first local signal to generate a first mixed signal carrying data of each of the at least three data signals;
   filtering the first mixed signal to produce a first filtered signal carrying data of a first plurality of the at least three data signals;
   processing the first filtered signal to extract the data of the first plurality of data signals;
   mixing the at least three data signals with a second local signal to generate a second mixed signal carrying the data of each of said at least three data signals;
   filtering the second mixed signal to produce a second filtered signal carrying data of a second plurality of the at least three data signals, wherein the second plurality is different from the first plurality; and

processing the second filtered signal to extract the data of the second plurality of data signals.

2. The method of claim 1, wherein the first local signal has a first frequency $LO_1$, the second local signal has a second frequency $LO_2$, each of the first and second mixed signals is filtered by filtering means having a pass-band of bandwidth $BW_F$, where $BW_F < (f_H - f_L)$, wherein $LO_2$ is different from $LO_1$.

3. The method of claim 2, wherein the first frequency $LO_1$ is arranged such that the first mixed signal carries the data of the first plurality of data signals in a frequency range corresponding to the pass-band, and the second frequency $LO_2$ is arranged such that the second mixed signal carries the data of the second plurality of data signals in the frequency range.

4. The method of claim 2 or 3, wherein processing the first and second filtered signals comprises sampling the first and second filtered signals respectively at a sampling rate R, where $R \geq 2BW_F$.

5. The method in accordance with any preceding claim, further comprising controlling one of frequency synthesizer or local oscillator to switch between generating the first local signal and the second local signal.

6. The method of claim 1, wherein the first and second local signals have the same frequency.

7. The method of claim 6, wherein the first mixed signal is filtered by a first band-pass filter having a first pass-band of a first bandwidth $BW_{F1}$ centered on a first center frequency $CF_1$, where $BW_{F1} < (f_H - f_L)$, and the second mixed signal is filtered by a second band-pass filter having a second pass-band of a second bandwidth $BW_{F2}$ centered on a second, different center frequency $CF_2$, where $BW_{F2} < (f_H - f_L)$, and wherein the second band-pass filter is different from the first band-pass filter.

8. The method of claim 7, further comprising controlling switch means to switch between routing the first mixed signal to the first band-pass filter and routing the first mixed signal to the second band pass filter.

9. The method of claim 6, wherein each of the first and second mixed signals is filtered using a common controllable filter, the controllable filter is controlled to switch between a first mode, in which it provides a first pass-band of a first bandwidth $BW_{F1}$ centered on a first center frequency $CF_1$, where $BW_{F1} < (f_H - f_L)$, and a second mode, in which it provides a second pass-band of a second bandwidth $BW_{F2}$ centered on a second center frequency $CF_2$, where $BW_{F2} < (f_H - f_L)$, and the method further comprising controlling the controllable filter to switch between the first mode and the second mode, wherein $CF_2$ is different from $CF_1$.

10. The method in accordance with any one of claims 7 to 9, wherein the first bandwidth is equal to the second bandwidth.

11. The method in accordance with any preceding claim, wherein each data signal is a navigation signal from a respective space vehicle of a global navigation satellite system, the method further comprising processing the data extracted from the first and second pluralities of data signals to determine a location or a position.

12. An Apparatus comprising means arranged to implement a method in accordance with any preceding claim.

13. The apparatus in accordance with claim 12, comprising:

a receiving antenna for receiving the data signals;
a frequency synthesizer for generating the local signal;
a mixer arranged to mix the received data signals and the local signal to generate a mixer output signal;
filtering means arranged to filter the mixer output signal; and
an analogue-to-digital converter arranged to sample the filtered signal from the filtering means.

14. A computer program comprising instructions arranged, when executed, to implement a method as claimed in any one of claims 1 to 11.

15. A machine-readable storage storing a program as claimed in claim 14.

FIG.1

FIG.2

FIG.3

FIG.4

FIG.5

FIG.6A

FIG.6B

LO

Carrier Sig BW=BW$_C$

f$_L$     f$_C$     f$_H$

# FIG.7A

IF SIGNAL SPECTRUM
OUTSIDE FILTER
RESPONSE (1/4 sig)

PB

BW$_F$ = ½BW$_C$

IF SIGNAL SPECTRUM
OUTSIDE FILTER
RESPONSE (1/4 sig)

0Hz     IF

IF FILTER RESPONSE

IF CENTRE FREQUENCY
(CF$_1$)

# FIG.7B

FIG.8A

FIG.8B

FIG.8C

FIG.9

FIG.10A

FIG.10B

FIG.10C

FIG.11

EP 2 214 033 A2

FIG.12